# EUROPEAN PATENT APPLICATION

(11) **EP 0 897 237 A2**
(43) Date of publication of application: **17.02.1999**
(21) Application number: 98306510.3
(22) Date of filing: 14.08.1998
(51) Int. Cl.: H04M 1/72

(54) **TDMA communication device and method**

(30) Priority: 14.08.1997 KR 3883697
(71) Applicant: Samsung Electronics Co., Ltd., Suwon-city, Kyungki-do (KR)
(72) Inventor: Kim, Kyung-Wook, Kyongsangbuk-do (KR)
(74) Representative: Lunt, Mark George Francis

(57) **Abstract**

A time synchronisation method in a TDMA (Time Division Multiple Access) cordless communication device. In the method, channels and time slots of TDMA are sequentially scanned upon initialisation of the cordless communication device, and it is determined whether a time slot is occupied by a different cordless communication device. If the occupied time slot exists, the cordless communication device is synchronised with the occupied time slot and, otherwise, a portable unit registered with the cordless communication device is synchronised with the cordless communication device through designation of a time slot.

## Description

The present invention relates to a TDMA communication device and method, and, in particular, to a method and apparatus for providing synchronisation between cordless communication devices.

In a TDMA cordless communication device, channels are differentiated from one another by their frequencies, and each channel is assigned transmission and reception time slots for use in data transfer between terminals. A major cordless phone system using this scheme, DECT (Digital European Cordless Telecommunication), supports CT-2 which can make an outgoing call but cannot receive an incoming call and a home cordless telephone comprises a base unit and a portable unit. A DECT telephone will be described below, taking a home cordless telephone as an example.

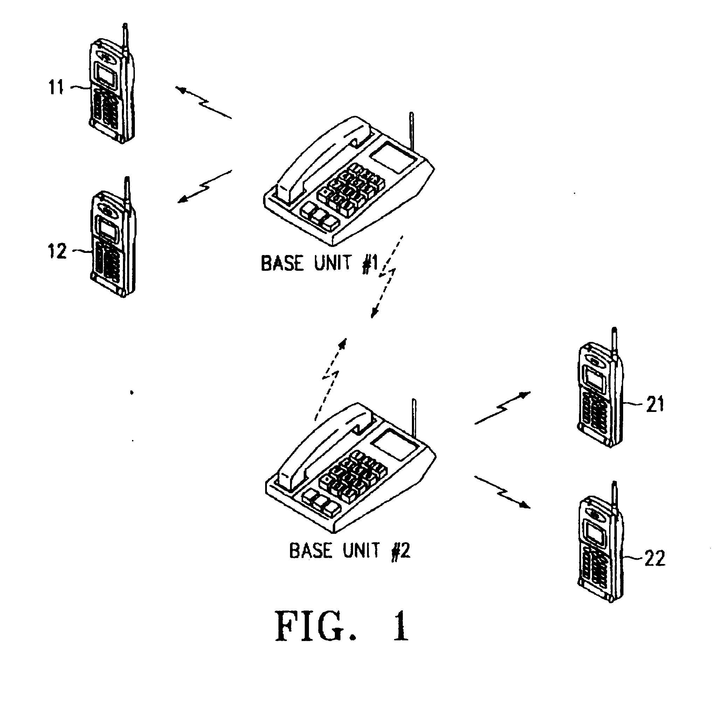

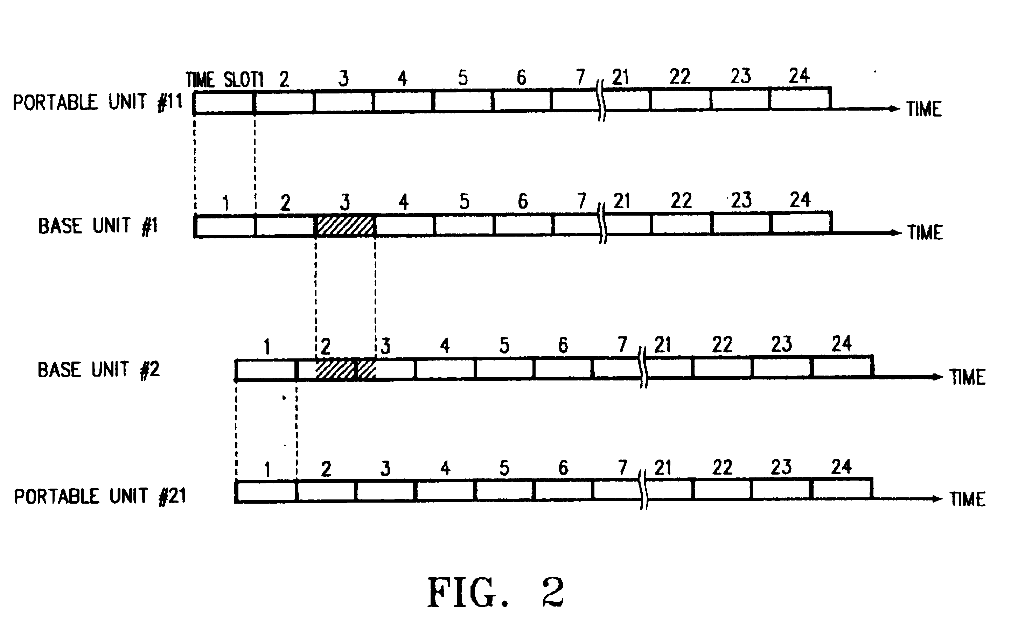

Figure 1 illustrates a TDMA home cordless telephone with a call in progress, and figure 2 is a timing diagram of overlapping time slots of two non-synchronised base units of the cordless telephone system. As shown in figure 1, two portable units 11 and 12 are registered with a first base unit, and two other portable units 21 and 22 are registered with a second base unit 2.

As a DECT telephone uses TDMA, a communication is conducted in time slots derived from time multiplexing. In this DECT telephone, there are 10 channels in a frequency band available for use, and each channel with a corresponding frequency is assigned a total of 24 time slots, that is, 12 time slots for transmission and 12 time slots for reception respectively. Thus, 240 time slots in total are available.

Referring to figure 1, the base unit 1 selects one channel from ten channels if it is to communicate with the portable unit 11 or the portable unit 12, and designate transmission and reception time slots in the selected channel. Here, the two portable units 11 and 12 are synchronised with the base unit 1. The base unit 1 communicates with the portable unit 11 or the portable unit 12 using the designated time slots at the frequency of the selected channel. Communication between the base unit 2 and the portable units 21 and 22 is conducted based on this method.

When communications are concurrent in both the base units 1 and 2, there are two cases to be considered: (i) the base units 1 and 2 are spaced sufficiently far apart from each other to prevent frequency interference;(ii) and they are spaced efficiently close to each other to generate frequency interference. The former case allows normal communication as described above, but the latter case may cause frequency interference or time slot overlap. To solve these problems, a base unit should use time slots which are not occupied by the other base unit or select a different channel. Referring to figure 2, assuming that base unit 1 selects one from ten available channels and uses time slot #3, and that the base units 1 and 2 are not synchronised, sharing the same frequency, base unit 2 determines that data exists in both time slots #2 and #3. Thus, the base unit 2 should communicate with the portable units registered with the base unit 2 using time slots other than time slots #2 and #3. Although it is possible to operate the base units in such a manner, it reduces the efficiency of use of limited resources, channels and time slots under the circumstances of using multiple cordless telephones in a small space like an apartment complex. Furthermore, specific users may not be able access services for a specific time period when all the channels and time slots are busy. These problems are also encountered with CT-2.

An object of the present invention is to provide a synchronisation method between different base units in a TDMA cordless communication device.

Accordingly, a first aspect of the present invention provides a synchronisation method for a TDMA (Time Division Multiple Access) first communication device, which uses a plurality of time slots for communication with at least one portable communication device registered with the first communication device, the method comprising the steps of:
scanning the time slots of the first communication device, and
determining whether or not a time slot of the first communication device is occupied by traffic originating from a second communication device; and
synchronising the time slots of the first and second communication devices if a time slot of the first communication device is occupied by traffic originating from a second communication device.

Once the first communication device has been synchronised with the second communication device, the portable units registered with the first communication device may be unable to communicate with the first communication device.

Accordingly, an embodiment of the present invention provides a method further comprising the step of
synchronising the at least one portable unit with the first communication device, if there is a time slot of the first communication device which is occupied by traffic originating from a second communication device.

As each new portable unit is added to the TDMA communication system, there is a need to allow communication between the portable units which are already registered with the first communication device. Therefore, an embodiment provides method further comprising the step of registering other portable units with the first communication device; and synchronising the other portable units with the first communication device.

Preferably, an embodiment provides method wherein the step of determining comprises the step of determining whether a time slot is occupied by a different communication device for a predetermined period of time.

Still more preferably, an embodiment provides a method wherein the step of scanning the time slots comprises the steps of:
selecting one channel of a plurality of channels of a frequency band available for TDMA communication; each channel comprising a plurality of time slots;
scanning the time slots of the selected channel for one time slot cycle to determine whether or not data exists;
selecting one of the remaining channels when all the time slots of the channel have been scanned, and scanning the time slots of the newly selected channel; and
terminating scanning of the channels and the time slots when all the slots have been scanned.

An embodiment provides a method wherein time slots are counted by a counter which is set to vary each time slot has been scanned and has the total number of the time slots in the available channels as a maximum value, and a time slot with the maximum count value is determined to be the last time slot, in the step of scanning time slots.

A second aspect of the present invention provides a synchronisation apparatus for a TDMA (Time Division Multiple Access) first communication device, which uses a plurality of time slots for communication with at least one portable communication device registered with the first communication device, the apparatus comprising:
means for scanning the time slots of the first communication device, and
means for determining whether or not a time slot of the first communication device is occupied by traffic originating from a second communication device; and
means for synchronising the time slots of the first and second communication devices if a time slot of the first communication device is occupied by traffic originating from a second communication device.

Once the first communication device has been synchronised with the second communication device, the portable units registered with the first communication device may be unable to communicate with the first communication device. Therefore, an embodiment provides apparatus further comprising means for synchronising the at least one portable unit with the first communication device, if there is a time slot of the first communication device which is occupied by traffic originating from a second communication device.

As each new portable unit is added to the TDMA communication system, there is a need to allow communication between the portable units which are already registered with the first communication device. Therefore, there is provided apparatus further comprising means for registering other portable units with the first communication device; and synchronising the other portable units with the first communication device.

Preferably, an embodiment provides apparatus wherein the means for determining comprises means for determining whether a time slot is occupied by a different cordless communication device for a predetermined period of time.

Sill more preferably, an embodiment provides apparatus wherein the means for scanning the time slots comprises:
means for selecting one channel of a plurality of channels of a frequency band available for TDMA communication; each channel comprising a plurality of time slots;
means for scanning the time slots of the selected channel for one time slot cycle to determine whether or not data exists;
means for selecting one of the remaining channels when all the time slots of the channel have been scanned, and scanning the time slots of the newly selected channel; and
means for terminating scanning of the channels and the time slots when all the slots have been scanned.

An embodiment provides apparatus wherein time slots are counted by a counter which is set to vary each time slot has been scanned and which has the total number of the time slots in the available channels as a maximum value, and a time slot with the maximum count value is determined to be the last time slot, in the step of scanning time slots.

An embodiment provides a time synchronisation method in a TDMA (Time Division Multiple Access) cordless communication device. In the method, channels and time slots of TDMA are sequentially scanned upon initialisation of the cordless communication device, and it is determined whether a time slot is occupied by a different cordless communication device. If the occupied time slot exists, the cordless communication device is synchronised with the occupied time slot and, otherwise, a portable unit registered with the cordless communication device is synchronised with the cordless communication device through designation of a time slot.

Embodiments of the present invention will now be described, by way of example only, with reference to the accompanying drawings in which:
figure 1 is a view of a TDMA home cordless telephone with a call in progress;
figure 2 is a timing diagram of time slots suffering interference between different non-synchronised base units;
figure 3 is a block diagram of a base unit in a TDMA cordless telephone to which the present invention is applied;
figure 4 is a flowchart for controlling synchronisation of a base unit with another base unit according to an embodiment of the present invention; and
figure 5 is a timing diagram of time slots of different communication devices which are synchronised according to the present invention.

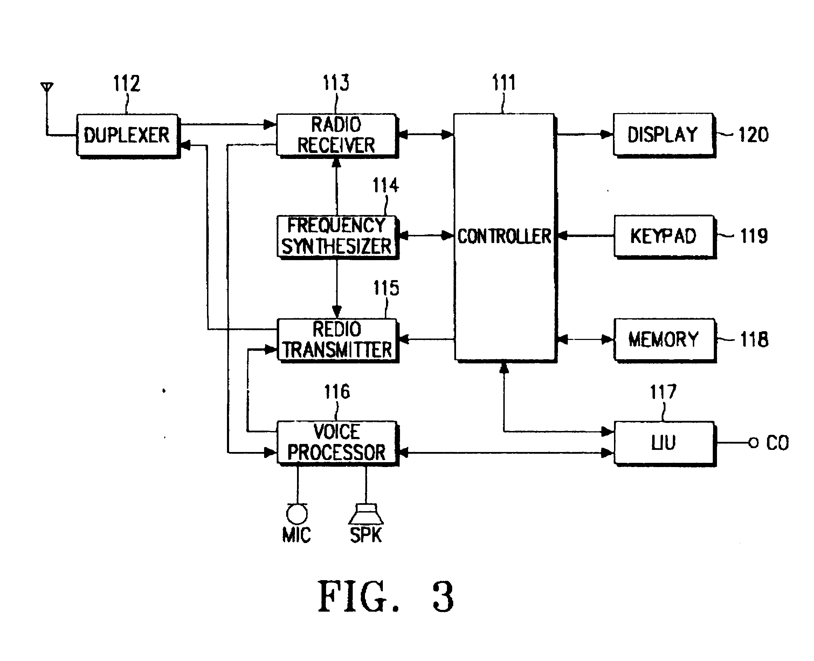

Figure 3 is a block diagram of a base unit in a TDMA cordless telephone to which the present invention is applied.

A controller 111 controls the entire operation of the base unit, especially time synchronisation between the base unit and another base unit according to the present invention. A duplexer 112 feeds a radio signal received from an antenna ANT to a radio receiver 113, and a radio signal received from a radio transmitter 115 to the antenna ANT. The radio transmitter 115 mixes an encoded voice signal received from a voice processor 116 with a carrier signal received from a frequency synthesiser 114 and outputs the resulting signal to the duplexer 112. The frequency synthesiser 114 generates the carrier signal for use in transmission under the control of the controller 111 and outputs the carrier signal to the radio transmitter 115. The frequency synthesiser 114 also generates a signal for extracting data from an input signal and outputs the signal to the radio receiver 113. The voice processor 116 decodes an encoded voice signal received from the radio receiver 113 and outputs the decoded signal as an audible sound to a speaker SPK. The voice processor 116 also encodes an electrical representation of a voice signal received from a microphone MIC and outputs the encoded voice signal to the radio transmitter 115. When it is connected to a central office line (or main line) CO via a line interface unit (LIU) 117, the voice processor 116 establishes a communication link for transmitted and received voice signals. The line interface unit 117, connected between the central office line CO and the voice processor 116, connects or disconnects the communication link to or from the central office line CO according to an on- or off-hook action of a hook switch (not shown) under the control of the controller 111. A memory 118 includes a program memory (not shown) for storing data control programs, especially control data of each block required for time synchronisation between the base unit and a different base unit according to the present invention, and a data memory (not shown) for storing data generated during a control operation. A keypad 119, having digit keys for dialling and function keys, generates a key input signal corresponding to a key pressed by a user and feeds the key input signal to the controller 111. A display 120 displays the operational state of the base unit under the control of the controller 111.

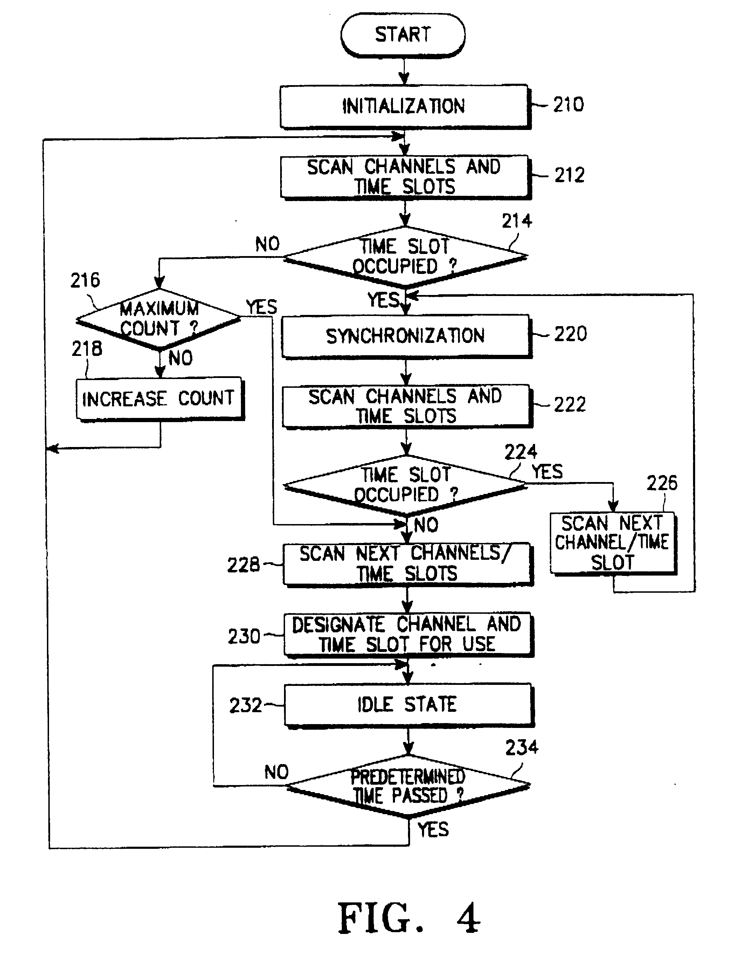

Figure 4 is a flowchart for controlling time synchronisation between base units according to an embodiment of the present invention. Referring to figures 3 and 4, when power is on, the controller 111 loads initialisation data for the operation of the base unit from the memory 118 and initialises each portion of the base shown in figure 3, at step 210. The controller 111 scans channels and time slots in step 212. Ten available channels can be scanned by three methods: (1) the channels are sequentially scanned in an ascending order of frequency; (2) the channels are sequentially scanned in a descending order in frequency; and (3) the channels are sequentially scanned at random.

Time slots in a selected channel are scanned for a period corresponding to the duration of one time slot cycle or longer to determine whether data exists in the time slots. Generally, a transmission time slot is equal in duration to a reception time slot. The time duration of one time slot cycle is the sum the durations of 12 basic transmission time slots and the durations of 12 basic reception time slots.

Alternatively, time slots are counted by a counter which is set to increase in value by one for each basic time slot. When a channel has been scanned, the counter indicates 24 and with the ten available channels having been checked, the total count value is 240. Thus, the counter enters into operation upon every selection of a channel so that it can be determined whether all the channels and time slots have been scanned. In the embodiment of the present invention, time slots are scanned by use of the counter and channel selection is not specified.

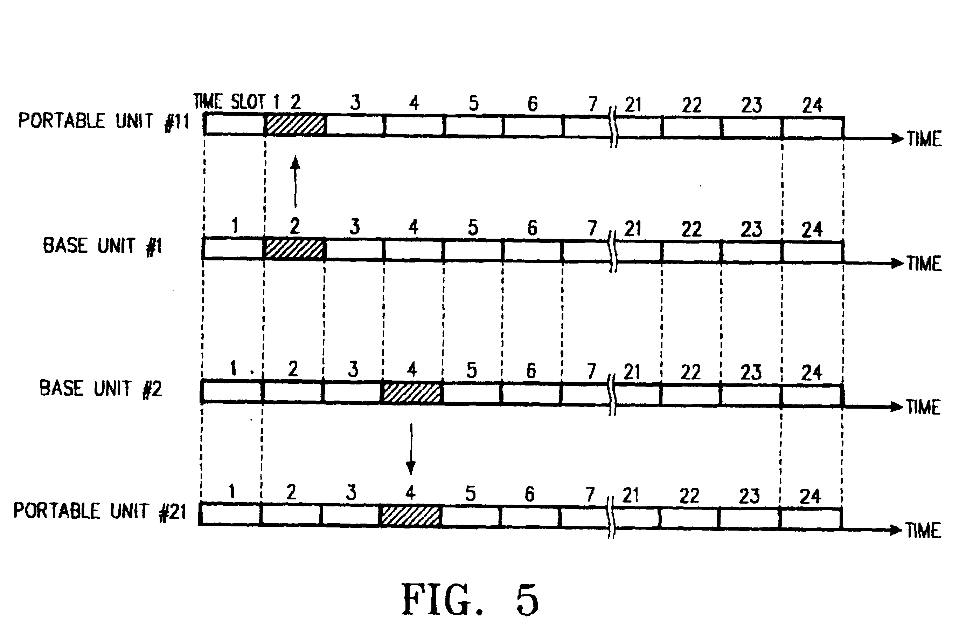

After the controller 111 has selected a channel in step 212, a determination is made as to whether or not data exists in one time slot of the selected channel in step 214. If the selected channel is channel #1 and the scanned time slot is time slot #1, the counter is set to 1. If the time slot is not occupied in step 214, the controller 111 determines whether the count value is at a maximum predetermined value in step 216. If the count value is at the maximum value, the procedure jumps to step 228, and otherwise, the controller 111 increases the count in step 218 and returns to step 212. If the controller 111 has completely checked all of the time slots of the selected channel, it selects one of the remaining channels by one of the above-described three methods and scans the time slots of the newly selected channel.
Meanwhile, if the time slot is determined to be busy at step 214, the base unit is synchronised with the busy time slot in step 220. Though this procedure, transmission and reception time slots are synchronised. Although synchronised time slots are assigned the same numbers as shown in figure 5 for better understanding of the present invention, they may be differently numbered in an another embodiment. After the base unit has been synchronised with another base unit in step 220, the controller 111 scans a time slot of a predetermined channel in step 222, to synchronise the base unit with a portable unit registered with the base unit. In step 224, the controller 111 determines whether the time slot of the selected channel is busy. If the time slot is busy, the controller 111 scans the next slot in the channel, in step 226. If the scanned time slot is the last one in the channel, the controller 111 shifts to another channel and scans a time slot of that channel.

Meanwhile, if the selected time slot is determined to be unoccupied at step 224, or the count value is at a maximum in step 216, the controller 111 designates the unoccupied time slots of the channel as one for communication between the base unit and a portable unit registered with the base unit, in step 228. Then, the controller 111 sends data necessary for time synchronisation to the portable unit, in step 230. Thus, the portable unit is synchronised with the base unit. In step 232, the controller 111 is placed in an idle state.

In step 234, the controller 111 determines whether or not a predetermined period of time passed. The time is preset freely by a user or during a manufacturing process. The time can be varied depending on whether or not the base unit is synchronised with another base unit. This can be realised in various ways by anyone skilled in the art and thus its detailed description is omitted here.

Referring to figure 4 again, upon passage of the predetermined period of time in step 234, the controller 111 returns to step 212 and performs the synchronisation procedure. If the predetermined period of time is determined not to have passed in step 234, the controller 111 goes back to the idle state in step 232.

With two or more portable units registered in the cordless communication device, the controller 111 selects one of the non-synchronised portable units, and synchronises the selected portable unit with the base unit in the same time slot as was used for the previously synchronised portable unit. Through repetition of this procedure, time synchronisation can be achieved between the base unit and all the portable units registered with the base unit.

While the present invention has been described in detail with reference to the specific embodiment, it is a mere exemplary application. Thus, it is to be clearly understood that many variations can be made by anyone skilled in the art within the scope and spirit of the present invention.

## Claims

1. A synchronisation method for a TDMA (Time Division Multiple Access) first communication device, which uses a plurality of time slots for communication with at least one portable communication device registered with the first communication device, the method comprising the steps of:
scanning the time slots of the first communication device, and
determining whether or not a time slot of the first communication device is occupied by traffic originating from a second communication device; and
synchronising the time slots of the first and second communication devices if a time slot of the first communication device is occupied by traffic originating from a second communication device.

2. A method as claimed in claim 1, further comprising the step of synchronising the at least one portable unit with the first communication device, if there is a time slot of the first communication device which is occupied by traffic originating from a second communication device.

3. A method as claimed in either of claims 1 or 2, further comprising the step of registering other portable units with the first communication device; and synchronising the other portable units with the first communication device.

4. A method as claimed in any preceding claim, wherein the step of determining comprises the step of determining whether a time slot is occupied by a different cordless communication device for a predetermined period of time.

5. A method as claimed in any preceding claim, wherein the step of scanning the time slots comprises the steps of:
selecting one channel of a plurality of channels of a frequency band available for TDMA communication; each channel comprising a plurality of time slots;
scanning the time slots of the selected channel for one time slot cycle to determine whether or not data exists;
selecting one of the remaining channels when all the time slots of the channel have been scanned, and scanning the time slots of the newly selected channel; and
terminating scanning of the channels and the time slots when all the slots have been scanned.

6. A method as claimed in any preceding claim, wherein time slots are counted by a counter which is set to vary each time slot has been scanned and has the total number of the time slots in the available channels as a maximum value, and a time slot with the maximum count value is determined to be the last time slot, in the step of scanning time slots.

7. A synchronisation apparatus for a TDMA (Time Division Multiple Access) first communication device, which uses a plurality of time slots for communication with at least one portable communication device registered with the first communication device, the apparatus comprising:
means for scanning the time slots of the first communication device, and
means for determining whether or not a time slot of the first communication device is occupied by traffic originating from a second communication device; and
means for synchronising the time slots of the first and second communication devices if a time slot of the first communication device is occupied by traffic originating from a second communication device.

8. Apparatus as claimed in claim 7, further comprising
means for synchronising the at least one portable unit with the first communication device, if there is a time slot of the first communication device which is occupied by traffic originating from a second communication device.

9. Apparatus as claimed in either of claims 7 or 8, further comprising means for registering other portable units with the first communication device; and synchronising the other portable units with the first communication device.

10. Apparatus as claimed in any of claims 7 to 9, wherein the means for determining comprises means for determining whether a time slot is occupied by a different cordless communication device for a predetermined period of time.

11. Apparatus as claimed in any of claims 7 to 10, wherein the means for scanning the time slots comprises:
means for selecting one channel of a plurality of channels of a frequency band available for TDMA communication; each channel comprising a plurality of time slots;
means for scanning the time slots of the selected channel for one time slot cycle to determine whether or not data exists;
means for selecting one of the remaining channels when all the time slots of the channel have been scanned, and scanning the time slots of the newly selected channel; and
means for terminating scanning of the channels and the time slots when all the slots have been scanned.

12. Apparatus as claimed in any of claims 7 to 11, wherein time slots are counted by a counter which is set to vary each time slot has been scanned and which has the total number of the time slots in the available channels as a maximum value, and a time slot with the maximum count value is determined to be the last time slot, in the step of scanning time slots.
